(19) Europäisches Patentamt
European Patent Office
Office européen des brevets

(11) EP 0 606 638 B1

# (12) EUROPÄISCHE PATENTSCHRIFT

(45) Veröffentlichungstag und Bekanntmachung des Hinweises auf die Patenterteilung:
**21.05.1997 Patentblatt 1997/21**

(51) Int. Cl.$^6$: **C01B 33/18**, C01B 33/157

(21) Anmeldenummer: **93120858.1**

(22) Anmeldetag: **23.12.1993**

## (54) Kohlenstoff-Partikel enthaltende SiO2-Aerogele und Verfahren zu ihrer Herstellung

SiO2 aerogels containing carbon particles and process for their preparation

Aérogels de SiO2 contenant des particules de carbone et procédé de leur préparation

(84) Benannte Vertragsstaaten:
**BE CH DE FR GB IT LI NL SE**

(30) Priorität: **13.01.1993 DE 4300598**

(43) Veröffentlichungstag der Anmeldung:
**20.07.1994 Patentblatt 1994/29**

(73) Patentinhaber: **BASF Aktiengesellschaft**
**67063 Ludwigshafen (DE)**

(72) Erfinder:
- **Schwertfeger, Fritz**
  **D-97074 Wuerzburg (DE)**
- **Schubert, Ulrich, Prof.Dr.**
  **D-97084 Wuerzburg (DE)**
- **Seyfried, Elisabeth**
  **D-97072 Wuerzburg (DE)**
- **Kuhn, Joachim**
  **D-97072 Wuerzburg (DE)**
- **Fricke, Jochen, Prof.Dr.**
  **D-97070 Wuerzburg (DE)**
- **Mielke, Manfred**
  **D-69118 Heidelberg (DE)**

(56) Entgegenhaltungen:
**DE-A- 3 525 802**

- **DATABASE WPI Week 9209, Derwent Publications Ltd., London, GB; AN 92-068677 & JP-A-4 012 014 (TOKAI CARBON KK)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 606 638 B1

Printed by Rank Xerox (UK) Business Services
2.14.3/3.4

## Beschreibung

Die Erfindung betrifft Kohlenstoff-Partikel enthaltende $SiO_2$-Aerogele sowie Verfahren zu ihrer Herstellung. Die Erfindung betrifft insbesondere solche Kohlenstoff-Partikel enthaltenden $SiO_2$-Aerogele, die durch thermische Nachbehandlung von gegebenenfalls organisch modifizierten $SiO_2$-Aerogelen in einer bestimmten Gasatmosphäre erhältlich sind.

Um optimale Wärmedämmeigenschaften von $SiO_2$-Aerogelen zu erreichen, müssen diese eine hohe spezifische Extinktion im Infrarot-Bereich aufweisen. Dazu werden in der Regel feinteilige Ruße (Ruß: überwiegend kristalliner Kohlenstoff) durch Zugabe von Ruß beim Sol-Gel-Prozeß oder durch physikalische Beimischung von Ruß zu $SiO_2$-Aerogelpulvern in die $SiO_2$-Aerogele eingebracht.

Hierbei kommt es jedoch häufig zu einer Agglomerierung der Rußpartikel, so daß sowohl deren homogene Verteilung im Aerogel als auch die für eine optimale Extinktion notwendige Partikelgröße nicht gewährleistet ist. Deshalb kann die gewünschte spezifische Extinktion im Infrarot-Bereich nur in sehr begrenztem Umfang eingestellt werden.

Außerdem wird durch die Zugabe von Ruß die Produktionsanlage in wesentlichen apparativen Teilen verschmutzt, so daß jede Umstellung auf die Herstellung von ungetrübtem, transparentem $SiO_2$-Aerogel mit sehr hohem Reinigungsaufwand verbunden ist.

Schließlich ist aus der JP-A-12 014/1992 ein Verfahren zur Herstellung von hochdispersem, kohlenstoffhaltigem $SiO_2$ mit einer Dichte um 2200 $kg/m^3$ bekannt, bei dem eine Wasserglaslösung in eine mindestens 1300°C heiße Verbrennungsgasatmosphäre (Propan/Sauerstoff) versprüht wird und monomeres Styrol zugeführt wird.

Aufgabe der Erfindung war es, Kohlenstoff-Partikel enthaltende $SiO_2$-Aerogele bereitzustellen, die die genannten Nachteile nicht mehr aufweisen.

Diese Aufgabe wird überraschend gelöst durch Kohlenstoff-Partikel enthaltende $SiO_2$-Aerogele, die durch eine bestimmte thermische Behandlung von gegebenenfalls organisch modifizierten $SiO_2$-Aerogelen erhältlich sind.

Gegenstand der Erfindung sind somit Kohlenstoff-Partikel enthaltende $SiO_2$-Aerogele, erhältlich durch Erhitzen von

a) organisch modifizierten $SiO_2$-Aerogelen in Gegenwart mindestens eines pyrolysierbaren Kohlenwasserstoffgases und/oder mindestens eines inerten Gases, oder

b) organisch unmodifizierten $SiO_2$-Aerogelen in Gegenwart mindestens eines pyrolysierbaren Kohlenwasserstoffgases und gegebenenfalls inerten Gasen

auf Temperaturen zwischen 600 und 1300°C.

Gegenstand der Erfindung sind darüber hinaus Kohlenstoff-Partikel enthaltende $SiO_2$-Aerogele mit einer Dichte von weniger als 250 $kg/m^3$, erhältlich durch Erhitzen von

a) organisch modifizierten $SiO_2$-Aerogelen mit einer Dichte von weniger als 250 $kg/m^3$ in Gegenwart mindestens eines pyrolysierbaren Kohlenwasserstoffgases und oder mindestens eines inerten Gases, oder

b) organisch unmodifizierten $SiO_2$-Aerogelen mit einer Dichte von weniger als 250 $kg/m^3$ in Gegenwart mindestens eines pyrolysierbaren Kohlenwasserstoffgases und gegebenenfalls inerten Gasen

auf Temperaturen zwischen 350 und 700°C.

Gegenstand der Erfindung ist außerdem ein Verfahren zur Erzeugung von Kohlenstoff-Partikeln in $SiO_2$-Aerogelen, wobei

a) organisch modifizierte $SiO_2$-Aerogele in Gegenwart mindestens eines pyrolisierbaren Kohlenwasserstoffgases und/oder mindestens eines inerten Gases, oder

b) organisch unmodifizierte $SiO_2$-Aerogele in Gegenwart mindestens eines pyrolisierbaren Kohlenwasserstoffgases und gegebenenfalls inerten Gasen

auf Temperaturen zwischen 600 und 1300°C erhitzt werden.

Gegenstand der Erfindung ist darüber hinaus ein Verfahren zur Erzeugung von Kohlenstoff-Partikeln in $SiO_2$-Aerogelen mit einer Dichte von weniger als 250 $kg/m^3$, wobei

a) organisch modifizierte $SiO_2$-Aerogele mit einer Dichte von weniger als 250 $kg/m^3$ in Gegenwart mindestens eines pyrolysierbaren Kohlenwasserstoffgases und/oder mindestens eines inerten Gases, oder

b) organisch unmodifizierte $SiO_2$-Aerogele mit einer Dichte von weniger als 250 kg/$m^3$ in Gegenwart mindestens eines pyrolysierbaren Kohlenwasserstoffgases und gegebenenfalls inerten Gasen

auf Temperaturen zwischen 350 und 700°C erhitzt werden.

Das erfindungsgemäße Verfahren wird im folgenden auch als Pyrolyse bezeichnet.

Die erfindungsgemäß eingesetzten organisch modifizierten $SiO_2$-Aerogele enthalten im allgemeinen direkt an Siliziumatome gebundene oder über Sauerstoffatome gebundene organische Reste R. Bevorzugte organisch modifizierte $SiO_2$-Aerogele enthalten zumindest teilweise direkt an Siliziumatome gebundene organische Reste R.

Geeignete organische Reste R sind beispielsweise der Alkyl-, Alkenyl-, Alkinyl- oder Arylrest. Vorzugsweise ist der organische Rest ein Alkyl- oder Arylrest. Besonders bevorzugte Alkylreste sind der Methyl- und der Propylrest. Als Arylrest wird vorzugsweise Phenyl eingesetzt.

Als organisch modifizierte $SiO_2$-Aerogele im Sinne der Erfindung gelten auch die bereits Kohlenstoff-Partikel enthaltenden $SiO_2$-Aerogele, wie sie durch Erhitzen von

a) organisch modifizierten $SiO_2$-Aerogelen in Gegenwart mindestens eines pyrolysierbaren Kohlenwasserstoffgases und/oder mindestens eines inerten Gases, oder

b) organisch unmodifizierten $SiO_2$-Aerogelen in Gegenwart mindestens eines pyrolysierbaren Kohlenwasserstoffgases und gegebenenfalls inerten Gasen

auf Temperaturen zwischen 600 und 1300°C erhalten werden können.

Organisch modifizierte $SiO_2$-Aerogele lassen sich beispielsweise auf bekannte Weise über den Sol-Gel-Prozeß unter Verwendung von Organo(trimethoxy)silanen $RSi(OMe)_3$ mit nicht hydrolysierbaren organischen Resten R herstellen. Für $MeSi(OMe)_3$ ist dies bereits in "Hydrophobic Aerogels from $Si(OMe)_4$/$MeSi(OMe)_3$ Mixtures" von F. Schwertfeger, W. Glaubitt, V. Schubert, veröffentlicht im Journal of Non-Crystalline Solids, Band 145 (1992), Seiten 85-89, beschrieben.

Durch basenkatalysierte Hydrolyse und Kondensation, beispielsweise von Gemischen aus Tetramethoxysilan, $Si(OMe)_4$, und Organo(trimethoxy)silanen, $RSi(OMe)_3$ können organo-substituierte Alkogele und daraus durch anschließende überkritische Trocknung, beispielsweise mit Methanol, die entsprechenden $SiO_2$-Aerogele erhalten werden:

$$x\ RSi(OMe)_3 + y\ Si(OMe)_4 + (3x + 4y)\ H_2O + z\ MeOH$$

$$\xrightarrow[\text{wäßrige Ammoniaklösung}]{\text{0,01 -normale}}$$

$$\underset{\text{(Alkogel)}}{[RSiO_{3/2}]_x[SiO_2]_y} \xrightarrow[\text{mit Methanol}]{\text{überkritische Trocknung}} \text{$SiO_2$-Aerogel gleicher Zusammensetzung}$$

Beispielsweise werden $RSi(OR')_3$ (R = Alkyl, Alkenyl, Alkinyl, Aryl, vorzugsweise Methyl, Propyl, Phenyl) und $Si(OR')_4$ (R' = Alkyl, Aryl, vorzugsweise Methyl, Ethyl) in verschiedenen Verhältnissen vermischt (x Mole $RSi(OR')_3$, y Mole $Si(OR')_4$). Das Verhältnis von x zu y kann beliebig sein, für die Erreichung der gewünschten Eigenschafts-Kombinationen liegt es jedoch vorzugsweise zwischen 0:1 und 2:3. Um eine vorgegebene Dichte des $SiO_2$-Aerogels zu erreichen, werden die Alkoxysilane in einer bestimmten Menge des jeweiligen Alkohols R'OH gelöst. Der Zusammenhang zwischen der gewünschten Dichte d und der dazu notwendigen Lösungsmittelmenge V ($V_{MeOH}$ im Falle von Methanol) ist gegeben durch:

$$d = \frac{[x \cdot {}^{M}RSiO_{3/2} + y \cdot {}^{M}SiO_2]}{{}^{V}Si(OR')_4 + {}^{V}RSi(OR')_3 + {}^{V}H_2O + {}^{V}MeOH}$$

worin $^{M}RSiO_{3/2}$ und $^{M}SiO_2$ die Molmassen der aus $RSi(OR')_3$ bzw. $Si(OR')_4$ erhaltenen oxidischen Komponenten sind.

Zu der Lösung wird in einer Ausführungsform des erfindungsgemäßen Verfahrens Wasser in einer Menge von (3x + 4y) Molen in Form einer 0,01-normalen wäßrigen Ammoniaklösung gegeben.

Nach Vermischung wird der Ansatz bis zur Vergelung in einem geschlossenen Gefäß bei 10 bis 60°C, vorzugsweise 20 bis 30°C, stehen gelassen.

Nach Erreichen des Gelpunktes werden die Gele im allgemeinen durch Aufbewahrung in einem geschlossenen Gefäß für 2 bis 20 Tage bei 10 bis 60°C, vorzugsweise 5 bis 10 Tage bei 20 bis 30°C, gealtert. Der geeignete Alterungs-Zeitraum kann dadurch ermittelt werden, daß man laufend das $H_2O/R'OH$-Verhältnis in den Gelen bestimmt, das sich nach Beendigung der Alterungsprozesse nicht mehr ändert.

Nach Alterung werden die Gele auf übliche und bekannte Weise (vgl. beispielsweise US-A-4,667,417) überkritisch getrocknet.

Hierbei kann es zwischen den zur überkritischen Trocknung verwendeten Lösungsmitteln (beispielsweise Methanol) und dem $SiO_2$-(Aero)gel zu einer chemischen Reaktion kommen, derart, daß beispielsweise im Falle von Methanol -O-Methyl-Gruppen gebildet werden.

Alternativ ist die Bildung von organisch modifizierten $SiO_2$-Aerogelen möglich, in denen die organischen Reste R ausschließlich über Sauerstoffatome an Siliziumatome gebunden sind, wobei von organisch unmodifizierten $SiO_2$-Aerogelen ausgegangen wird, die unter Zuhilfenahme geeigneter organischer Lösungsmittel (beispielsweise Methanol, Ethanol, Propanol, Isopropanol) überkritisch getrocknet wurden.

Organisch unmodifizierte $SiO_2$-Aerogele im Sinne der Erfindung sind $SiO_2$-Aerogele, die beispielsweise über einen Sol-Gel-Prozeß aus wäßrigem Natriumsilikat und Schwefelsäure, Auswaschen des Natriumsalzes, einen Lösungsmittelaustausch mit beispielsweise Kohlendioxid und überkritische Trocknung hergestellt wurden.

Die Kohlenstoff-Partikel enthaltenden $SiO_2$-Aerogele werden in einer Ausführungsform der Erfindung durch ein Verfahren erhalten, bei dem organisch unmodifizierte $SiO_2$-Aerogele, wie sie gemäß der DE-A-34 29 671 durch überkritische Trocknung herstellbar sind, in Gegenwart mindestens eines pyrolysierbaren Kohlenwasserstoffgases und gegebenenfalls inerten Gasen auf Temperaturen zwischen 600 und 1300°C erhitzt werden.

Hierzu werden die $SiO_2$-Aerogele im allgemeinen für einen Zeitraum zwischen 1 und 10, vorzugsweise 3 bis 5 Stunden bei Temperaturen zwischen 600 und 1300°C, vorzugsweise zwischen 700 und 1200°C und besonders bevorzugt zwischen 900 und 1000°C in einer pyrolysierbare Kohlenwasserstoffgase enthaltenden Atmosphäre gehalten. Vorzugsweise wird ein leichter Strom des pyrolysierbaren Kohlenwasserstoffgases eingestellt. Beispielsweise wird bei einer Aerogelmenge von 10 bis 100 $cm^3$ ein Strom von 10 bis 500 $cm^3$/min eingestellt.

Pyrolysierbare Kohlenwasserstoffgase im Sinne der Erfindung sind vorzugsweise Methan, Propan oder Acetylen. Es kann auch ein Gemisch wie Erdgas verwendet werden. Das pyrolysierbare Gas kann gegebenenfalls durch ein Inertgas wie insbesondere Stickstoff oder Argon verdünnt sein.

Nach dem vorstehend beschriebenen Verfahren werden beispielsweise, ausgehend von organisch unmodifizierten $SiO_2$-Aerogelen, in Perlform (Teilchendurchmesser 2 bis 6 mm) oder in Pulverform (Teilchendurchmesser 0,1 bis 0,3 mm), nach 1 bis 10 Stunden thermischer Behandlung Kohlenstoff-Partikel enthaltende $SiO_2$-Aerogele mit einem Kohlenstoffgehalt von 1 bis 43 Gew.-% erhalten. Derartige Kohlenstoff-Partikel enthaltende $SiO_2$-Aerogele hatten beispielsweise bei einem C-Gehalt von 16 Gew.-% eine spezifische Extinktion e (in $m^2$/kg) von 330 bei 2,5 µm, 290 bei 5,0 µm und 280 bei 6 µm.

In einer bevorzugten Ausführungsform der Erfindung werden Kohlenstoff-Partikel enthaltende $SiO_2$-Aerogele dadurch erhalten, daß organisch modifizierte $SiO_2$-Aerogele in Gegenwart mindestens eines pyrolysierbaren Kohlenwasserstoffgases und/oder mindestens eines inerten Gases auf Temperaturen zwischen 600 und 1300°C erhitzt werden.

Hierzu werden die $SiO_2$-Aerogele beispielsweise bei einer Temperatur zwischen 600 und 1300°C in der Atmosphäre eines chemisch inerten Gases gehalten. In einer bevorzugten Variante dieser Ausführungsform werden die $SiO_2$-Aerogele in einem leichten Strom des inerten Gases mit einer Aufheizrate von 5 bis 15°C/min, vorzugsweise 8 bis 10°C/min auf Temperaturen von 250 bis 500°C, vorzugsweise 350 bis 450°C erhitzt. Beispielsweise wird bei einer Aerogelmenge von 10 bis 100 $cm^3$ ein Strom von 10 bis 100 $cm^3$/min eingestellt.

Danach werden die $SiO_2$-Aerogele unter stationärer Inertgas-Atmosphäre mit einer Aufheizrate von 0,2 bis 10 °C/min, vorzugsweise 0,5 bis 2°C/min auf Temperaturen von 800 bis 1200°C, vorzugsweise 950 bis 1050°C weiter erhitzt.

Je nach gewünschter Teilchengröße der Kohlenstoff-Partikel, d.h. einer bestimmten IR-Extinktion, werden die $SiO_2$-Aerogel-Proben noch bis zu 15 Stunden bei Temperaturen von 800 bis 1200°C, vorzugsweise 4 bis 10 Stunden bei 900 bis 1000°C, gehalten.

Kohlenstoff-Partikel enthaltende $SiO_2$-Aerogele mit einer Dichte von weniger als 250 kg/$m^3$, vorzugsweise von weniger als 200 kg/$m^3$, sind vorteilhaft erhältlich durch Erhitzen von

a) organisch modifizierten $SiO_2$-Aerogelen mit einer Dichte von weniger als 250 kg/$m^3$, vorzugsweise von weniger als 200 kg/$m^3$, in Gegenwart mindestens eines pyrolysierbaren Kohlenwasserstoffgases und/oder mindestens

eines inerten Gases, oder

b) organisch unmodifizierten $SiO_2$-Aerogelen mit einer Dichte von weniger als 250 $kg/m^3$, vorzugsweise von weniger als 200 $kg/m^3$, in Gegenwart mindestens eines pyrolysierbaren Kohlenwasserstoffgases und gegebenenfalls inerten Gasen

auf Temperaturen zwischen 400 und 700°C, vorzugsweise 450 und 600°C.

Das erfindungsgemäße Verfahren kann in den üblichen Pyrolyseöfen, beispielsweise Quarzrohröfen, durchgeführt werden.

Die Eigenschaften der Kohlenstoffpartikel enthaltenden $SiO_2$-Aerogele lassen sich beispielsweise über die Pyrolysetemperatur in weiten Bereichen variieren. Bei Temperaturen zwischen 750 und 950°C liegen beispielsweise im Falle von R = Methyl Kohlenstoffpartikel neben unzersetzten Methylgruppen und kohlenstoffhaltigen Spezies mit einem kleineren C:H-Verhältnis als 3 vor. Mit zunehmender Temperatur verringert sich das C:H-Verhältnis. Bei einer Temperatur von 1000°C ist praktisch kein Wasserstoff mehr vorhanden und der Kohlenstoff liegt in elementarer Form vor.

Bei der Pyrolyse ändert sich das Volumen der $SiO_2$-Aerogele durch Schrumpfung leicht. Wegen der Entfernung organischer Komponenten wird außerdem die Masse der Proben kleiner. Daraus resultiert eine geringe Dichte-Änderung der Proben.

Die Volumen- und Dichte-Änderungen sind aber in der Regel in einem für Anwendungen unkritischen Bereich.

Die spezifische Oberfläche der $SiO_2$-Aerogele nimmt während der Pyrolyse (beispielsweise bei 1000°C) generell ab. Eine Haltezeit bei 1000°C über die zur vollständigen Pyrolyse notwendige Zeit hinaus führt zur weiteren Verkleinerung der Oberfläche. Um eine möglichst hohe spezifische Oberfläche zu erhalten, sollte die Pyrolysezeit daher so kurz wie möglich sein. Andererseits ermöglicht eine ausgedehntere Pyrolysezeit eine gezielte Reduktion der spezifischen Oberfläche, was im Hinblick auf eine Verminderung der Feuchtigkeitsaufnahme von Vorteil ist.

Die von den pyrolysierten $SiO_2$-Aerogelen aufgenommenen STEM-Aufnahmen zeigen im wesentlichen dieselbe charakteristische Aerogelstruktur wie die nicht-pyrolysierten Ausgangsmaterialien. Die Größe der in der Aerogelprobe homogen verteilten Kohlenstoff-Partikel liegt im unteren Nanometerbereich. Durch die pyrolytische Erzeugung der Kohlenstoff-Partikel wird also die Aerogelstruktur nicht entscheidend beeinflußt.

An einzelnen $SiO_2$-Aerogelen durchgeführte Raman-Messungen zeigen, daß die vorhandenen Kohlenstoff-Partikel sowohl kristalline als auch nicht-kristalline Bereiche aufweisen. Der Anteil an kristallinen Bereichen (Ruß) ist bei der Pyrolyse von phenylsubstituierten $SiO_2$-Aerogelen am höchsten. Die Haltezeit bei 1000°C hat keinen Einfluß auf den kristallinen Kohlenstoff-Anteil.

Untersuchungen mittels IR-Spektroskopie zeigen, daß die spezifische Extinktion e im Wellenlängenbereich von 2,3 bis 10 $\mu m$ beispielsweise bei Pyrolyse bis 1000°C je nach pyrolysierter organischer Gruppe in einem Bereich von 10 bis 100 $m^2/kg$ liegt. Bei gleicher Ausgangskonzentration des organo-substituierten Alkoxysilans steigt die spezifische Extinktion (nach Pyrolyse) für R = Methyl < Propyl < Vinyl << Phenyl.

Durch eine längere Haltezeit läßt sich die spezifische Extinktion deutlich erhöhen. Bei 1000°C beispielsweise läßt sich e auf ca. 200 $m^2/kg$ bei einer Wellenlänge von 2,3 $\mu m$ erhöhen.

Werden die bereits pyrolysierten Aerogele in Gegenwart eines pyrolysefähigen Gases erneut auf eine Temperatur zwischen 600 und 1300°C erhitzt, so läßt sich die spezifische Extinktion e im Wellenlängenbereich von 2,3 bis 10 $\mu m$ auf bis zu mindestens 800 $m^2/kg$ erhöhen.

In einer besonders bevorzugten Ausführungsform der Erfindung werden daher organisch modifizierte $SiO_2$-Aerogele in Gegenwart mindestens eines pyrolysierbaren Kohlenwasserstoffgases, das durch inerte Gase verdünnt sein kann, auf Temperaturen zwischen 600 und 1300°C erhitzt.

Die erfindungsgemäßen Kohlenstoff-Partikel enthaltenden $SiO_2$-Aerogele und das erfindungsgemäße Verfahren haben zahlreiche Vorteile.

In den erfindungsgemäßen $SiO_2$ Aerogelen liegen nicht agglomerierte Kohlenstoff-Partikel mit Größen von wenigen Nanometern in besonders homogener Verteilung vor.

Die gewünschte spezifische Extinktion kann durch Optimierung der Partikelgröße und -struktur durch Vorgabe einer bestimmten Pyrolysezeit und -temperatur und gegebenenfalls die Wahl der entsprechenden organischen Reste R eingestellt werden.

Außerdem können durch erneute Pyrolyse in Gegenwart von pyrolysefähigen Gasen gezielt sowohl zusätzliche Kohlenstoffpartikel in die $SiO_2$ Aerogele eingebaut als auch gezielt vergrößert werden, wodurch die spezifischen Extinktionswerte weiter zusätzlich erhöht werden.

Von besonderem Vorteil ist, daß durch das erfindungsgemäße Verfahren keine wesentlichen strukturellen Änderungen der eingesetzten $SiO_2$ Aerogele eintreten.

Bei gleichem Masseanteil an Kohlenstoff werden überraschenderweise höhere spezifische Extinktionswerte erreicht.

Das erfindungsgemäße Verfahren hat außerdem den Vorteil, daß die zur Herstellung der Aerogele verwendeten Reaktionsgefäße sowie das Autoklavensystem rußfrei bleiben.

Beispiele 1 bis 9

Herstellung der organisch modifizierten $SiO_2$-Aerogele

Nach der folgenden allgemeinen Vorschrift wurden jeweils 100 ml organisch modifizierte $SiO_2$-Aerogele hergestellt, in denen der organische Rest R am Si-Atom variiert wurde. Als Reste R wurden der Methyl-, Vinyl-, Propyl- und Phenyl-Rest verwendet.

$RSi(OR')_3$ (R = Methyl, Vinyl, Propyl, Phenyl) und $Si(OR')_4$ (R' = Methyl) wurden in verschiedenen Verhältnissen vermischt (x Mole $RSi(OR')_3$, y Mole $Si(OR')_4$) und in einer bestimmten Menge Methanol gelöst (vgl. Tabelle 1).

Zu der Lösung wurde eine berechnete Menge an 0,01-normaler wäßriger Ammoniaklösung gegeben, entsprechend (3x + 4y) Molen Wasser. Nach Vermischung wurde der Ansatz bis zur Vergelung in einem geschlossenen Gefäß bei Raumtemperatur stehengelassen.

Nach Erreichen des Gelpunktes wurden die Gele durch Aufbewahrung in einem geschlossenen Gefäß für 7 Tage bei 30°C gealtert.

Nach der Alterung wurden die Gele wie in der DE-A-18 11 353 beschrieben überkritisch mit Methanol getrocknet.

In der Tabelle 1 sind die zur Herstellung eingesetzten Mengen und die Reaktionszeiten bis zum Vergelen angegeben.

Die organisch modifizierten $SiO_2$-Aerogele der Beispiele 1 bis 9 wurden mit einer Aufheizrate von 10°C/min im Argonstrom (50 bis 100 $cm^3$/min) auf eine Temperatur von 400°C erhitzt. In einer stationären Argon-Atmosphäre wurde anschließend mit einer Aufheizrate von 1°C/min auf 1000°C (Beispiel 8: 500°C) aufgeheizt. Bei den Beispielen 1 bis 6 wurde nach Erreichen von 1000°C und im Beispiel 8 nach Erreichen von 500°C die thermische Behandlung abgebrochen. Im Beispiel 7 wurde die $SiO_2$-Aerogel-Probe noch für 3 Stunden und im Beispiel 9 für 1 Stunde bei 1000°C in einem $CH_4$-Strom von 0,5 $cm^3$/min gehalten.

Die organisch modifizierten $SiO_2$-Aerogele wurden vor und nach Durchführung des erfindungsgemäßen Verfahrens charakterisiert.

An den organisch modifizierten $SiO_2$-Aerogelen wurde der Gehalt an organischem Kohlenstoff, der in Form von R und RO-Gruppen vorliegt, vor der Durchführung des erfindungsgemäßen Verfahrens, aber nach der überkritischen Trocknung mit Methanol bestimmt. Nach der Durchführung des erfindungsgemäßen Verfahrens wurde der Gehalt an elementarem Kohlenstoff bestimmt. Die Bestimmungen erfolgten jeweils durch Elementaranalyse.

An den $SiO_2$-Aerogelproben wurde außerdem die Schrumpfung infolge der Pyrolyse bestimmt. Hierzu wurde die prozentuale Abnahme des Durchmessers zylinderförmiger $SiO_2$-Aerogel-Proben bestimmt.

Sowohl an den $SiO_2$-Aerogelproben vor der Pyrolyse (nach der überkritischen Trocknung) und nach der Pyrolyse wurden die Dichten (in $kg/m^3$) und die spezifische Oberfläche (in $m^2/g$; gemessen nach der BET-Methode) gemessen.

An den pyrolysierten $SiO_2$-Aerogel-Proben wurde außerdem die spezifische Extinktion (in $m^2/kg$) bei 3, 5 und 10 µm mittels IR-Spektroskopie bestimmt.

Angaben zur Herstellung und Charakterisierung der organisch modifizierten $SiO_2$-Aerogele sind in Tabelle 1 und Angaben zur Charakterisierung der pyrolysierten $SiO_2$-Aerogele sind in Tabelle 2 aufgeführt.

An den pyrolisierten $SiO_2$-Aerogel-Proben der Beispiele 8 und 9 wurde mittels Heißdraht-Verfahren jeweils die Wärmeleitfähigkeit $\lambda$ gemessen.

Beim Heißdraht-Verfahren wird einem dünnen Draht (z.B. aus Platin) ab einem bestimmten Zeitpunkt eine zeitlich konstante elektrische Leistung zugeführt. Hierdurch kommt es zu einer Erwärmung des Drahtes, wobei sich der Draht in Medien mit hoher Wärmeleitfähigkeit langsamer erwärmt als in solchen mit einer niedrigen Wärmeleitfähigkeit. Die Erwärmung des Drahtes und damit indirekt die Wärmeleitfähigkeit des den Draht umgebenden Mediums kannnun über den mit zunehmender Temperatur zunehmenden Widerstand des Drahtes bestimmt werden (vgl. H.-P. Ebert, V. Bock, O. Nilsson und J. Fricke, "The Hot-Wire Method applied to porous materials with low thermal conductivity", 13th European Conference on Thermophysical Properties, Lissabon/Portugal Aug./Sept. 1993, zur Veröffentlichung in "High Temperatures - High Pressures" akzeptiert; sowie DIN 51046, Teil 1).

Mit dem Heißdraht-Verfahren wurde bei einer Temperatur von 300 K unter Luft von Atmosphärendruck für die Probe aus Beispiel 8 eine Leitfähigkeit von 0,012 W/m K und für die Probe aus Beispiel 9 eine Leitfähigkeit von 0,015 W/m K bestimmt.

Tabelle 1

| Bsp. | Herstellung und Charakterisierung der organisch modifizierten $SiO_2$-Aerogele | | | | | | | | |
|---|---|---|---|---|---|---|---|---|---|
| | R | $RSi(OMe)_3$ g (mmol) | $Si(OMe)_4$ g (mmol) | MeOH g | 0,01 n $NH_3$ aq. g | Reaktionszeit bis zum Vergelen min | Dichte $kg/m^3$ | Kohlenstoff-Gehalt mmol/100g | spez. Oberfläche $m^2/g$ |
| 1 | - | - | 50,72 (333) | 21,14 | 23,99 | 20 | 267 | 444 | 469 |
| 2 | Methyl | 8,99 (66) | 40,19 (264) | 21,20 | 22,57 | 25 | 256 | 615 | 566 |
| 3 | Methyl | 18,12 (133) | 30,44 (200) | 22,44 | 21,58 | 30 | 210 | 818 | 610 |
| 4 | Vinyl | 9,78 (66) | 40,19 (264) | 22,38 | 22,57 | 55 | 267 | 832 | 590 |
| 5 | Propyl | 10,84 (66) | 40,19 (264) | 21,24 | 22,57 | 90 | 230 | 885 | 505 |
| 6 | Phenyl | 13,09 (66) | 40,19 (264) | 20,63 | 22,57 | >90 | 288 | 1605 | 450 |
| 7 | (identisch mit Beispiel 2) | | | | | | | | |
| 8 | Methyl | 20,44 (150) | 91,34 (600) | 109,50 | 51,30 | 90 | - | 375 | - |
| 9 | Phenyl | 19,83 (100) | 60,88 (400) | 148,65 | 34,20 | 360 | - | - | - |

Tabelle 2

| Beispiel | Charakterisierung der erfindungsgemäßen $SiO_2$-Aerogele | | | | | | |
|---|---|---|---|---|---|---|---|
| | Dichte $kg/m^3$ | Kohlenstoff-Gehalt mmol/100g | spez. Oberfläche $m^2/g$ | Schrumpfung % | spezifische Extinktion $m^2/kg$ | | |
| | | | | | 3 µm | 5 µm | 10 µm |
| 1 | 281 | 160 | 412 | 5,4 | 1 | 1 | 1 |
| 2 | 276 | 216 | 444 | 6,6 | 8 | 10 | 100 |
| 3 | 239 | 515 | 394 | 11,7 | 12 | 10 | 100 |
| 4 | 395 | 310 | 403 | 37,4 | 40 | 20 | 100 |
| 5 | 274 | 750 | 331 | 18,1 | 15 | 10 | 100 |
| 6 | 340 | 1218 | 320 | 14,3 | 60 | 40 | 100 |
| 7 | n.b. | 2323 | 487 | n.b. | 800 | 800 | 800 |
| 8 | 170 | 375 | - | - | 5 | 4 | 100 |
| 9 | 178 | - | - | 12 | - | - | - |

## Patentansprüche

1. Kohlenstoff-Partikel enthaltende $SiO_2$-Aerogele, erhältlich durch Erhitzen von

a) organisch modifizierten $SiO_2$-Aerogelen in Gegenwart mindestens eines pyrolysierbaren Kohlenwasserstoffgases und/oder mindestens eines inerten Gases, oder

b) organisch unmodifizierten $SiO_2$-Aerogelen in Gegenwart mindestens eines pyrolysierbaren Kohlenwasserstoffgases und gegebenenfalls inerten Gasen

auf Temperaturen zwischen 600 und 1300°C.

**2.** Verfahren zur Erzeugung von Kohlenstoff-Partikeln in $SiO_2$-Aerogelen, wobei

a) organisch modifizierte $SiO_2$-Aerogele in Gegenwart mindestens eines pyrolysierbaren Kohlenwasserstoffgases und/oder mindestens eines inerten Gases, oder

b) organisch unmodifizierte $SiO_2$-Aerogele in Gegenwart mindestens eines pyrolysierbaren Kohlenwasserstoffgases und gegebenenfalls inerten Gasen

auf Temperaturen zwischen 600 und 1300°C erhitzt werden.

**3.** Verfahren nach Anspruch 2, dadurch gekennzeichnet, daß organisch modifizierte $SiO_2$-Aerogele eingesetzt werden, die zumindest teilweise direkt an ein Siliziumatom gebunden einen organischen Rest R, ausgewählt aus Alkyl, Alkenyl, Alkinyl und Aryl, enthalten.

**4.** Verfahren nach Anspruch 3, dadurch gekennzeichnet, daß der organische Rest ein Aryl oder Alkyl ist.

**5.** Kohlenstoff-Partikel enthaltende $SiO_2$-Aerogele mit einer Dichte von weniger als 250 $kg/m^3$, erhältlich durch Erhitzen von

a) organisch modifizierten $SiO_2$-Aerogelen mit einer Dichte von weniger als 250 $kg/m^3$ in Gegenwart mindestens eines pyrolysierbaren Kohlenwasserstoffgases und/oder mindestens eines inerten Gases, oder

b) organisch unmodifizierten $SiO_2$-Aerogelen mit einer Dichte von weniger als 250 $kg/m^3$ in Gegenwart mindestens eines pyrolysierbaren Kohlenwasserstoffgases und gegebenenfalls inerten Gasen

auf Temperaturen zwischen 350 und 700°C.

**6.** Verfahren zur Erzeugung von Kohlenstoff-Partikeln in $SiO_2$-Aerogelen mit einer Dichte von weniger als 250 $kg/m^3$, wobei

a) organisch modifizierte $SiO_2$-Aerogele mit einer Dichte von weniger als 250 $kg/m^3$ in Gegenwart mindestens eines pyrolysierbaren Kohlenwasserstoffgases und/oder mindestens eines inerten Gases, oder

b) organisch unmodifizierte $SiO_2$-Aerogele mit einer Dichte von weniger als 250 $kg/m^3$ in Gegenwart mindestens eines pyrolysierbaren Kohlenwasserstoffgases und gegebenenfalls inerten Gasen

auf Temperaturen zwischen 350 und 700°C erhitzt werden.

## Claims

**1.** An $SiO_2$ aerogel containing carbon particles and obtainable by heating

a) organically modified $SiO_2$ aerogels in the presence of at least one pyrolyzable hydrocarbon gas and/or at least one inert gas or
b) organically unmodified $SiO_2$ aerogels in the presence of at least one pyrolyzable hydrocarbon gas and in the presence or absence of inert gases to 600-1300°C.

**2.** A process for the production of carbon particles in $SiO_2$ aerogels, wherein

a) organically modified $SiO_2$ aerogels are heated in the presence of at least one pyrolyzable hydrocarbon gas and/or at least one inert gas or

b) organically unmodified $SiO_2$ aerogels are heated in the presence of at least one pyrolyzable hydrocarbon gas and in the presence or absence of inert gases to 600-1300°C.

**3.** A process as claimed in claim 2, wherein organically modified $SiO_2$ aerogels are used which contain organic radicals R selected from the group consisting of alkyl, alkenyl, alkynyl and aryl, some or all of said radicals being bonded directly to a silicon atom.

**4.** A process as claimed in claim 3, wherein the organic radical is aryl or alkyl.

**5.** An $SiO_2$ aerogel containing carbon particles, having a density of less than 250 kg/m$^3$ and obtainable by heating

a) organically modified $SiO_2$ aerogels having a density of less than 250 kg/m$^3$ in the presence of at least one pyrolyzable hydrocarbon gas and/or at least one inert gas or
b) organically unmodified $SiO_2$ aerogels having a density of less than 250 kg/m$^3$ in the presence of at least one pyrolyzable hydrocarbon gas and in the presence or absence of inert gases to 350-700°C.

**6.** A process for the production of carbon particles in $SiO_2$ aerogels having a density of less than 250 kg/m$^3$, which comprises heating to 350-700°C

a) organically modified $SiO_2$ aerogels having a density of less than 250 kg/m$^3$ in the presence of at least one pyrolyzable hydrocarbon gas and/or at least one inert gas or
b) organically unmodified $SiO_2$ aerogels having a density of less than 250 kg/m$^3$ in the presence of at least one pyrolyzable hydrocarbon gas and in the presence or absence of inert gases.

## Revendications

**1.** Aérogels de $SiO_2$ contenant des particules de carbone, obtenus par chauffage

a) d'aérogels de $SiO_2$ modifiés organiquement en présence d'au moins un hydrocarbure gazeux pyrolysable et/ou d'au moins un gaz inerte, ou
b) d'aérogels de $SiO_2$ non modifies organiquement en présence d'au moins un hydrocarbure gazeux pyrolysable et éventuellement de gaz inertes,

à des températures comprises entre 600 et 1300°C.

**2.** Procédé de formation de particules de carbone dans des aérogels de $SiO_2$, dans lequel on chauffe à des températures comprises entre 600 et 1300°C

a) des aérogels de $SiO_2$ modifiés organiquement en présence d'au moins un hydrocarbure gazeux pyrolysable et/ou d'au moins un gaz inerte, ou
b) des aérogels de $SiO_2$ non modifiés organiquement en présence d'au moins un hydrocarbure gazeux pyrolysable et éventuellement de gaz inertes.

**3.** Procédé selon la revendication 2, caractérisé en ce que l'on utilise des aérogels de $SiO_2$ modifiés organiquement qui contiennent, lié directement au moins en partie à un atome de silicium, un reste organique R choisi parmi les restes alkyle, alcényle, alcynyle et aryle.

**4.** Procédé selon la revendication 3, caractérisé en ce que le reste organique R est un reste aryle ou alkyle.

**5.** Aérogels de $SiO_2$ contenant des particules de carbone, ayant une masse volumique de moins de 250 kg/m$^3$, obtenus par chauffage

a) d'aérogels de $SiO_2$ modifiés organiquement, ayant une masse volumique de moins de 250 kg/m$^3$, en présence d'au moins un hydrocarbure gazeux pyrolysable et/ou d'au moins un gaz inerte, ou
b) d'aérogels de $SiO_2$ non modifiés organiquement, ayant une masse volumique de moins de 250 kg/m$^3$, en présence d'au moins un hydrocarbure gazeux pyrolysable et éventuellement de gaz inertes,

à des températures comprises entre 350 et 700°C.

**6.** Procédé de formation de particules de carbone dans des aérogels de $SiO_2$ ayant une masse volumique de moins de 250 $kg/m^3$, dans lequel on chauffe à des températures comprises entre 350 et 700°C

a) des aérogels de $SiO_2$ modifiés organiquement, ayant une masse volumique de moins de 250 $kg/m^3$, en présence d'au moins un hydrocarbure gazeux pyrolysable et/ou d'au moins un gaz inerte, ou
b) des aérogels de $SiO_2$ non modifiés organiquement, ayant une masse volumique de moins de 250 $kg/m^3$, en présence d'au moins un hydrocarbure gazeux pyrolysable et éventuellement de gaz inertes.